(19) Europäisches Patentamt
European Patent Office
Office européen des brevets

(11) **EP 2 427 752 B1**

(12) **FASCICULE DE BREVET EUROPEEN**

(45) Date de publication et mention
de la délivrance du brevet:
**17.04.2013 Bulletin 2013/16**

(51) Int Cl.:
***G01N 21/21*** *(2006.01)*     ***G01J 4/04*** *(2006.01)*

(21) Numéro de dépôt: **10715878.4**

(86) Numéro de dépôt international:
**PCT/EP2010/055974**

(22) Date de dépôt: **03.05.2010**

(87) Numéro de publication internationale:
**WO 2010/128014 (11.11.2010 Gazette 2010/45)**

(54) **PROCEDE D'IDENTIFICATION D'UNE SCENE A PARTIR D'IMAGES POLARISEES MULTI LONGUEURS D'ONDE**

**VERFAHREN ZUR IDENTIFIZIERUNG EINER SZENE AUS MEHRFACHWELLENLÄNGENPOLARISATIONSBILDERN**

**METHOD FOR IDENTIFYING A SCENE FROM MULTIPLE WAVELENGTH POLARISED IMAGES**

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **07.05.2009 FR 0902227**

(43) Date de publication de la demande:
**14.03.2012 Bulletin 2012/11**

(73) Titulaires:
• **Thales**
**92200 Neuilly Sur Seine (FR)**
• **Institut D'Optique**
**91127 Palaiseau Cedex (FR)**

(72) Inventeurs:
• **ALOUINI, Mehdi**
**F-35340 Liffre (FR)**
• **BENIERE, Arnaud**
**F-91300 Massy (FR)**
• **DOLFI, Daniel**
**F-91400 Orsay (FR)**
• **BERGINC, Gérard**
**F-94320 Thiais (FR)**
• **GOUDAIL, François**
**F-91120 Palaiseau (FR)**

(74) Mandataire: **Henriot, Marie-Pierre et al
Marks & Clerk France
Conseils en Propriété Industrielle
Immeuble Visium
22, Avenue Aristide Briand
94117 Arcueil Cedex (FR)**

(56) Documents cités:
**US-A1- 2005 264 813**

• **BENIERE A ET AL: "Snapshot active polarimetric and multispectral laboratory demonstrator" LASER RADAR TECHNOLOGY AND APPLICATIONS XIV 15-16 APRIL 2009 ORLANDO, FL, USA, vol. 7323, 2 mai 2009 (2009-05-02), XP002558987 Proceedings of the SPIE - The International Society for Optical Engineering SPIE - The International Society for Optical Engineering USA ISSN: 0277-786X**
• **YONG-QIANG ZHAO ET AL: "Object Detection by Spectropolarimeteric Imagery Fusion" IEEE TRANSACTIONS ON GEOSCIENCE AND REMOTE SENSING, IEEE SERVICE CENTER, PISCATAWAY, NJ, US, vol. 46, no. 10, 1 octobre 2008 (2008-10-01), pages 3337-3345, XP011235711 ISSN: 0196-2892**
• **"Multispectral polarimetric imaging with coherent illumination: towards higher image contrast" POLARIZATION: MEASUREMENT, ANALYSIS, AND REMOTE SENSING VI 15 APRIL 2004 ORLANDO, FL, USA, vol. 5432, no. 1, 2004, pages 133-144, XP002558988 Proceedings of the SPIE - The International Society for Optical Engineering SPIE-Int. Soc. Opt. Eng USA ISSN: 0277-786X**

EP 2 427 752 B1

**Description**

Le domaine de l'invention est celui de l'identification de la nature du matériau d'un objet et de son état de surface.

Cette identification est souvent obtenue par imagerie multispectrale ; celle-ci est fondée sur une décomposition spectrale de chaque point de la scène observée.

Pour cela, il existe plusieurs techniques. Les plus répandues mettent en oeuvre un spectro-imageur ou des filtres colorés. D'autres techniques beaucoup moins courantes utilisent un spectromètre à transformée de Fourrier pour obtenir la décomposition spectrale. Les imageurs multispectraux et hyperspectraux fonctionnent principalement en passif : la lumière rétrodiffusée par la scène provient du rayonnement solaire ou dans l'infrarouge, de l'émission propre des objets de la scène. L'imagerie multispectrale couvre un large domaine d'applications. Elle est utilisée en géologie pour l'identification de certains minéraux et en particulier pour la détection de métaux précieux. Elle présente aussi un intérêt dans l'industrie pétrolière pour la détection de traces d'hydrocarbure et de gaz par observation directe ou par observation de leurs effets sur la végétation. Dans le domaine de l'agriculture l'imagerie multispectrale permet de suivre le développement des plantations, de détecter la présence de parasites ou d'évaluer le niveau d'irrigation. Il est à noter que l'imagerie multispectrale perce de plus en plus dans les domaines écologiques pour le suivi efficace de la déforestation ou du reboisement de la surface terrestre par exemple. Ces imageurs sont souvent embarqués à bord d'avions ou de satellites d'observation. Les satellites Landsat, par exemple, embarquent 7 radiomètres. On peut noter finalement que l'imagerie multispectrale commence à trouver des applications dans le domaine de la défense et de la sécurité pour la surveillance de zone notamment. Elle a pour objectif principal de contourner les mesures de camouflage prises par les militaires dans les domaines visible et thermique du spectre optique. Dans cette approche, on fait, en effet, le pari que la bande spectrale d'analyse est suffisamment grande et résolue pour que chaque objet ait une signature unique.

Bien que moins répandu, il est connu de recourir à l'imagerie polarimétrique monochromatique pour des applications en microscopie, en caractérisation de surfaces ou d'interfaces, dans la détection de contraintes et en biologie pour le suivi de l'évolution des cellules cancéreuses par exemple. Ce type d'imagerie permet d'analyser l'état de polarisation de la lumière rétrodiffusée par un objet. Les imageurs polarimétriques fonctionnent souvent en actif. On appelle imageur actif, un système qui comprend une source laser illuminant la scène d'intérêt et un système de détection captant le flux laser rétro-diffusé par la scène et permettant de former une image bi-dimensionnelle. Il est nécessaire de fixer ou de contrôler l'état de polarisation de la lumière d'éclairement.

Il existe diverses procédures d'acquisition. La plus exhaustive est l'imagerie de Muller dans laquelle on analyse de manière rigoureuse l'état de polarisation de la lumière rétrodiffusée en fonction de l'état de polarisation de la lumière incidente. Elle nécessite l'acquisition de 16 images, chacune associée à un élément de la matrice de Muller (4×4). L'imagerie de Muller est utile lorsque l'objet à caractériser produit sur la lumière, en plus d'une dépolarisation pure, un changement d'état de polarisation dû à un effet géométrique, de biréfringence ou d'activité optique. Elle trouve des applications dans le domaine biomédical et en microscopie. De manière plus pragmatique, on se contente souvent de réaliser une image de contraste polarimétrique. Dans ce cas on fixe l'état de polarisation de la lumière incidente (souvent une polarisation linéaire) et on analyse la lumière rétrodiffusée par l'objet suivant une polarisation parallèle ; puis on analyse la lumière rétrodiffusée par l'objet suivant une polarisation orthogonale. Ainsi, on limite à deux le nombre d'images à acquérir sans pour autant perdre énormément d'informations, pourvu que l'objet analysé soit purement dépolarisant. Cela est souvent le cas lorsqu'on considère des scènes à échelle humaine.

Dans ce qui précède, que ce soit par imagerie multi-spectrale ou par imagerie polarimétrique, les images sont acquises séquentiellement dans le temps.

Ces techniques ne sont plus performantes dès lors que la scène imagée varie dans le temps comme par exemple dans les cas d'une scène qui comprend des objets en mouvement, ou en présence de perturbations atmosphériques ou encore lorsque l'éclairement de la scène est impulsionnel avec des fluctuations d'énergie d'une impulsion à l'autre.

Le but de l'invention est de pallier ces inconvénients.

Dans la publication par BENIERE A ET AL, "Snapshot active polarimetric and multispectral laboratory demonstrator" dans LASER RADAR TECHNOLOGY AND APPLICATIONS XIV, Proceedings of the SPIE, 15-16 APRIL 2009 ORLANDO, FL, USA, vol. 7323, 2 mai 2009, un procédé et un système sont décrits dans lesquels des images multispectrales et polarimétriques acquises simultanément sont combinées pour améliorer le contraste entre des objets artificiels et l'arrière-plan.

L'invention est fondée sur la propriété suivante. Suivant la nature du matériau, il existe une relation entre le spectre d'intensité (aussi désigné spectre de réflectance) et le spectre de degré de polarisation, qui renseigne sur la nature de l'objet observé. Cette propriété est exploitée pour réaliser des images d'un nouveau type appelées images de corrélation spectro-polarimétrique ou images de CSP.

Plus précisément l'invention a pour objet un procédé d'identification d'images d'une scène qui comprend une étape d'illumination de la scène par un faisceau de N longueurs d'onde, polarisé selon une direction déterminée, N étant un entier supérieur ou égal à 3. Il est principalement caractérisé en ce qu'il comprend les étapes suivantes :

- acquisition simultanée pour chaque longueur d'onde d'une image polarisée selon ladite direction, soit N images notées $X_{//}(\lambda_i)$ avec i variant de 1 à N et d'une image polarisée selon une direction perpendiculaire à ladite direction, soit N images notées $X_\perp(\lambda_i)$, ces images $X_\perp(\lambda_i)$ étant spatialement distinctes des images $X_{//}(\lambda_i)$,
- calcul pour chaque longueur d'onde, d'une image d'intensité, qui est une combinaison linéaire de $X_{//}(\lambda_i)$ et de $X_\perp(\lambda_i)$, à ces N images d'intensité correspondant donc pour chaque pixel un spectre d'intensité,
- calcul pour chaque longueur d'onde, d'une image de contraste de polarisation à partir d'un rapport d'intensité calculé en fonction de $X_{//}(\lambda_i)$ et de $X_\perp(\lambda_i)$, à ces N images de contraste de polarisation correspondant donc pour chaque pixel un spectre de contraste de polarisation,
- calcul d'une image de la scène dite image de contraste spectro-polarimétrique et notée image CSP, chaque pixel de cette image étant obtenue à partir du spectre d'intensité et du spectre de contraste du pixel considéré.

Ce procédé permet d'obtenir les informations recherchées, sur la base d'images fabriquées à partir du degré de corrélation entre les spectres d'intensité et de contraste de polarisation.

Il permet d'obtenir les informations d'identification d'une scène aussi bien sur des scènes statiques que mobiles, et cela même en présence de turbulences atmosphériques. Il s'affranchit du bruit lié aux fluctuations temporelles de l'intensité d'illumination et la statistique du bruit sur les deux N images orthogonales est la même.

L'image de contraste de polarisation est par exemple calculée en fonction de $(X_{//}(\lambda_i)- X_\perp(\lambda_i)) / (X_{//}(\lambda_i) + X_\perp(\lambda_i))$ ou de $X_{//}(\lambda_i) / X_\perp(\lambda_i)$.

L'image d'intensité est par exemple de la forme $X_{//}(\lambda_i) + X_\perp(\lambda_i)$.

Selon une caractéristique de l'invention, K autres images CSP sont respectivement obtenues à partir du spectre d'intensité et du spectre de contraste par K autres calculs, et une nouvelle image CSP est obtenue à partir de ces K images CSP (K ≥ 1).

L'image CSP peut être obtenue à partir d'un graphe spectro-polarimétrique GSP qui comporte N points de coordonnées $U_i = _{INT}(\lambda_i)$ et $V_i = OSC(\lambda_i)$.

On propose différents exemples de modes de calcul, établis à partir des formules suivantes :

$$INT(\lambda_i) = X_{//}(\lambda_i) + X_\perp(\lambda_i) \ et$$

$$OSC(\lambda_i) = (X_{//}(\lambda_i)- X_\perp(\lambda_i)) / (X_{//}(\lambda_i) + X_\perp(\lambda_i)).$$

Selon un premier mode de calcul, l'image CSP est obtenue par ajustement du GSP par une fonction exponentielle décroissante.

Selon un deuxième mode de calcul, l'image CSP est obtenue par corrélation linéaire du GSP.

Selon un troisième mode de calcul, l'image CSP est obtenue par un indice de confiance du GSP.

Selon un quatrième mode de calcul, l'image CSP est obtenue par le rapport entre la dispersion du spectre d'intensité et du spectre d'OSC

Selon une caractéristique de l'invention, les images $X_\perp(\lambda_i)$ et $X_{//}(\lambda_i)$ sont entrelacées.

L'invention a aussi pour objet un système d'identification d'une scène qui comprend des moyens de mise en oeuvre du procédé tel que précédemment décrit.

Selon une caractéristique de l'invention, les moyens de mise en oeuvre comportent un dispositif d'illumination de la scène par un faisceau de N longueurs d'onde, polarisé selon une direction déterminée, un dispositif d'acquisition simultanée des N images $X_{//}(\lambda_i)$, et des N images notées $X_\perp(\lambda_i)$ et des moyens de traitement desdites images aptes à calculer une image CSP.

Selon un mode d'exploitation particulier, le dispositif d'acquisition comprend un seul détecteur.

D'autres caractéristiques et avantages de l'invention apparaîtront à la lecture de la description détaillée qui suit, faite à titre d'exemple non limitatif et en référence aux dessins annexés dans lesquels :

la figure 1 représente schématiquement deux exemples de spectres de réflectance et d'OSC pour une plaque métallique (a) et pour un étalon de couleur rouge (b),
les figures 2 représentent schématiquement un premier exemple de configuration d'un dispositif d'acquisition de N images $X_{//}(\lambda_i)$ et de N images $X_\perp(\lambda_i)$, utilisant un prisme de Wollaston et un même détecteur (fig 2a) ou un cube séparateur de polarisation et deux détecteurs distincts (fig 2b),
les figures 3 représentent schématiquement un deuxième exemple de configuration d'un dispositif d'acquisition de N images $X_{//}(\lambda_i)$ et de N images $X_\perp(\lambda_i)$, utilisant une lame séparatrice et des polariseurs avec (fig 3a) ou sans (fig 3b) image intermédiaire,

la figure 4 représente schématiquement un troisième exemple de configuration d'un dispositif d'acquisition de N images $X_{//}(\lambda_i)$ et de N images $X_\perp(\lambda_i)$, utilisant deux dispositifs distincts,

la figure 5 représente schématiquement un quatrième exemple de configuration d'un dispositif d'acquisition de N images $X_{//}(\lambda_i)$ et de N images $X_\perp(\lambda_i)$ entrelacées,

la figure 6 représente schématiquement un exemple d'images INT et OSC obtenues avec l'imageur décrit en relation avec la figure 2a,

la figure 7 représente schématiquement un exemple de graphe spectro-polarimétrique (GSP) représenté par N (N=7) points de coordonnées Ui et Vi, et la fonction de mérite ajustée, pour un pixel d'une image d'un plastique rouge.

D'une figure à l'autre, les mêmes éléments sont repérés par les mêmes références.

On va tout d'abord expliciter la propriété exploitée par l'invention.

En éclairement polarisé monochromatique, on peut corréler les effets de dépolarisation avec la rugosité surfacique des objets et leur nature. On sait, par exemple, que les objets métalliques dépolarisent moins la lumière que les objets diffusants. On est ainsi capable d'augmenter artificiellement le contraste d'un objet métallique dans une scène naturelle. Pour cela, on éclaire la scène avec de la lumière polarisée (linéairement par exemple) et on acquiert deux images de polarisations parallèle $X_{//}$, et orthogonale, $X_\perp$. On calcule ensuite, à partir de ces deux images, une image de contraste, OSC "Orthogonal State Contrast", donnée par la formulation suivante : $OSC = (X_{//} - X_\perp) / (X_{//} + X_\perp)$. Cependant l'utilisation d'une seule longueur d'onde n'est pas suffisante pour déterminer la nature d'un objet. En effet, suivant la longueur d'onde d'éclairement un objet diffusant, cette fois-ci, peut présenter un degré de polarisation aussi élevé qu'un objet métallique. On constate par exemple, que le degré de polarisation de la lumière diffusée par une plaque métallique augmente légèrement avec la longueur d'onde car sa rugosité apparente diminue. Cela n'est plus valable pour les objets diffusants. On peut décrire les objets diffusants comme des objets présentant une intensité diffusée incohérente plus importante que l'intensité diffusée cohérente. Ainsi, on montre que des peintures de couleurs différentes, mais présentant la même rugosité de surface, ont des degrés de polarisation différents. De plus, leur degré de polarisation dépend fortement de leur couleur et de la longueur d'onde d'éclairement. En particulier, on a observé que les spectres de réflectance et d'OSC de ces peintures présentent des profils complémentaires. Cela reste dans une certaine mesure, valable pour d'autres objets diffusants tels que le plastique et les objets naturels.

Pour comprendre ces observations, il faut distinguer les effets de surface et de volume. Si on éclaire un matériau diffusant à une longueur d'onde où il absorbe, le peu de lumière rétrodiffusée provient de l'interaction surfacique. Elle est donc peu dépolarisée. A l'inverse, si on éclaire le même matériau à une longueur d'onde où il n'absorbe pas, la lumière subit alors des diffusions multiples en volume. Elle est donc fortement dépolarisée. Les spectres de degré de polarisation et de réflectance d'un objet non métallique sont donc complémentaires, alors qu'ils ne le sont pas pour un matériau métallique. Afin de quantifier ces effets, la demanderesse a mis en place un modèle phénoménologique. Ce modèle est basé sur une séparation des contributions surfaciques et volumiques à la dépolarisation. La faible dépolarisation induite par la surface est liée à la rugosité et elle dépend du rapport rugosité / longueur d'onde. A l'inverse, la dépolarisation induite par les interactions volumiques étant liée à l'absorption du matériau, elle dépend fortement de la longueur d'onde d'éclairement et peut présenter des variations spectrales non monotones.

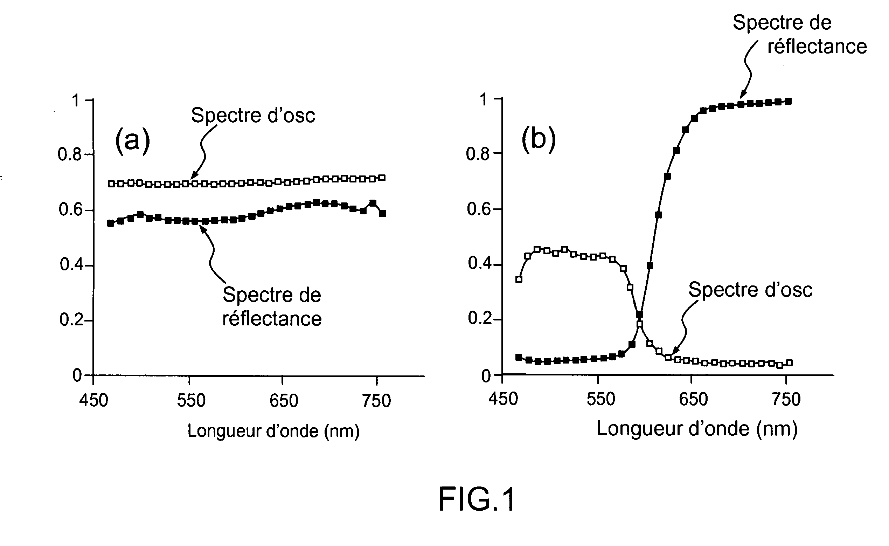

Suivant la nature du matériau, la relation qui existe entre le spectre de réflectance et le spectre de degré de polarisation renseigne donc sur la nature de l'objet observé. On montre figure 1 des exemples de spectres de réflectance et d'OSC obtenus pour une plaque métallique et un étalon de couleur rouge.

C'est cette propriété qui est exploitée dans l'invention pour réaliser des images d'un nouveau type appelées images de corrélation spectro-polarimétrique ou images CSP.

Afin de réaliser les images de CSP, il est nécessaire tout d'abord d'illuminer la scène par un faisceau de N longueurs d'onde, polarisé selon une direction déterminée, puis d'une part d'avoir accès, simultanément et en tout point de l'image, aux deux états de polarisation orthogonaux et cela à plusieurs longueurs d'onde (N longueurs d'onde $\lambda_i$, i variant de 1 à N) et d'autre part d'analyser des spectres d'intensité et de degré de polarisation.

La pertinence de cette analyse dépend directement de la qualité de mesure. Celle-ci doit donc être le plus exempte possible des imperfections techniques liées à l'acquisition séquentielle des deux états de polarisation.

On considère tout d'abord l'acquisition simultanée des 2 N images polarisées.

Selon un premier mode de réalisation, les images des deux états de polarisation orthogonaux sont formées simultanément sur la même matrice de détection. On s'affranchit ainsi du bruit lié aux fluctuations temporelles de l'intensité d'illumination et on garantit que la statistique de bruit sur les deux images orthogonales est la même.

La difficulté est alors d'obtenir sur le détecteur deux images exemptes d'aberrations.

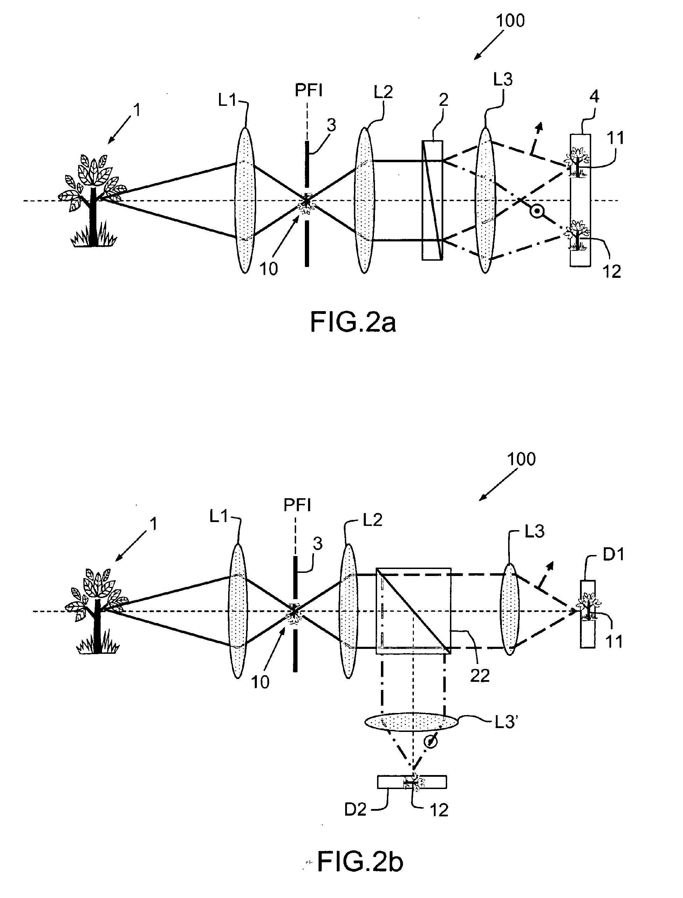

Selon un premier exemple de dispositif 100 d'acquisition des 2N images de la scène 1, montré figure 2a, la séparation spatiale des deux états de polarisation est obtenue à l'aide d'un prisme de Wollaston 2. Comme schématisé sur cette figure, on réalise au moyen d'un premier groupement de lentilles L1 une image intermédiaire 10 que l'on projette à l'infini au moyen d'un second groupement de lentilles L2, avant d'entrer dans le prisme de Wollaston 2. Un masque de champ rectangulaire 3 est disposé dans le plan focal intermédiaire PFI où est formée l'image intermédiaire 10, pour que les images polarisées 11 et 12 respectivement notées $X_{//}(\lambda_i)$ et $X_\perp(\lambda_i)$ ne débordent pas l'une sur l'autre sur le détecteur 4. Une fois séparés angulairement, les deux états de polarisation sont imagés sur la matrice de détection 4 au moyen d'un troisième groupement de lentilles L3. Cette approche confère à l'imageur spectro-polarimétrique une limite de sensibilité imposée par le bruit de photon et non plus par les différentes imperfections et bruits techniques divers.

La conception optique de cet imageur doit être faite avec soin afin de minimiser à la fois les aberrations géométriques et chromatiques.

Les N longueurs d'onde peuvent appartenir à la même bande spectrale visible, très proche infrarouge, proche infrarouge, infrarouge ou ultraviolet ; elles peuvent aussi êtres extraites de différentes bandes spectrales.

La sélection en longueur d'onde (ou spectrale) est obtenue au niveau de la matrice de détection qui peut être trichrome (N=3), quadrichrome (N=4) ou plus.

La sélectivité spectrale peut aussi être obtenue avec une matrice de détection monochrome, soit en plaçant devant la pupille d'entrée des filtres interférentiels, soit en accordant la longueur d'onde de la (des) source(s) d'éclairement.

Les N images $X_{//}(\lambda_i)$ peuvent être spatialement superposées mais pas nécessairement. De même pour les images $X_\perp(\lambda_i)$.

Cet imageur 100 peut être décliné en plusieurs variantes suivant la matrice de détection utilisée. Il peut ainsi couvrir les domaines de longueur d'onde visible en utilisant une matrice de détection à base de Silicium couleur ou monochrome, très proche infrarouge en utilisant une matrice de détection à base d'InGaAs, proche infrarouge en utilisant une matrice de détection à base de HgCdTe et proche ultraviolet en utilisant une matrice à base de SiC, GaN ou AlGaN.

Selon une variante de ce premier mode de réalisation, montrée figure 2b le prisme de Wollaston est remplacé par un cube 22 séparateur de polarisation. En sortie de ce cube 22, les deux états de polarisation sont spatialement séparés et sont respectivement imagés sur deux détecteurs matriciels distincts D1 et D2 au moyen des troisièmes groupements de lentilles L3 et L3'.

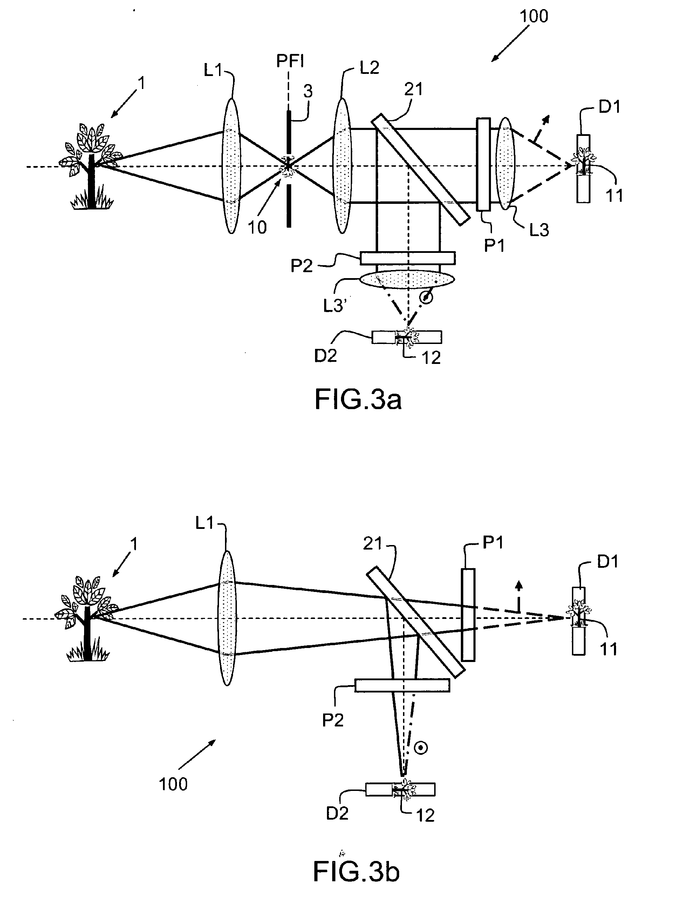

Selon un deuxième exemple de dispositif 100 d'acquisition des 2N images, montré figure 3a, la séparation spatiale de l'image est obtenue à l'aide d'une lame séparatrice 21 disposée à l'emplacement du prisme de Wollaston de l'exemple précédent. Sur une première voie issue de cette lame séparatrice 21, sont disposés un polariseur P1 permettant d'obtenir un premier état de polarisation parallèle, puis un troisième groupement de lentilles L3 formant les N images polarisées $X_{//}(\lambda_i)$ sur un premier détecteur D1 ; sur la deuxième voie issue de cette lame séparatrice 21 sont disposés un polariseur P2 permettant d'obtenir l'état de polarisation perpendiculaire, puis un troisième groupement de lentilles L3' formant les N images polarisées $X_\perp(\lambda_i)$ sur un second détecteur D2. Les détecteurs D1 et D2 de même type que celui de l'imageur précédent, sont de préférence identiques.

Selon une variante de ce deuxième mode de réalisation, montrée figure 3b, on ne réalise pas d'image intermédiaire : les images sont directement formées sur les détecteurs matriciels D1 et D2 au moyen d'un premier groupement de lentilles L1. On n'utilise pas les groupements de lentilles L2, L3 et L3'.

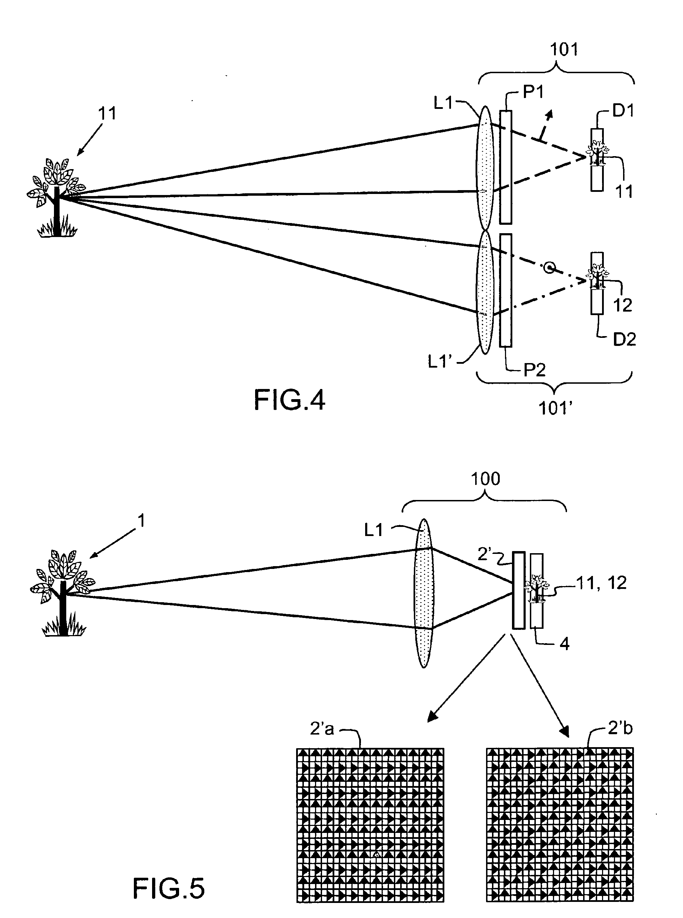

Selon un troisième exemple de dispositif d'acquisition des 2N images, montré figure 4, la séparation spatiale de l'image est obtenue par deux dispositifs d'imagerie 101, 101' distincts, chacun de ces dispositifs comprenant un groupement de lentilles L1, L1' assortie d'un polariseur P1, P1' et un détecteur D1, D1' sur lequel le groupement de lentilles L1, L1' forme l'image de la scène 1. Chaque imageur 101, 101' voit la scène selon un angle légèrement différent ce qui n'a pas de conséquence négative lorsque la scène est suffisamment éloignée.

On peut aussi utiliser un imageur formant sur un même détecteur des images $X_{//}(\lambda_i)$ et $X_\perp(\lambda_i)$ entrelacées, dont un exemple d'architecture est montré figure 5. Les images $X_{//}(\lambda_i)$ et $X_\perp(\lambda_i)$ (notées 11 et 12) de la scène 1 sont formées sur un détecteur 4 au moyen d'un groupement de lentilles L1, la séparation spatiale des images étant obtenue par leur entrelacement. Pour cela on place une grille 2' de polariseurs élémentaires juste devant le détecteur 4. Chaque polariseur élémentaire est de la taille d'un pixel du détecteur, la polarisation d'une ligne (ou d'une colonne) de polariseurs élémentaires étant alternée avec celle de la ligne (ou de la colonne) voisine comme illustré sur le polariseur vu de face de la référence 2'a ou encore, la polarisation de l'un étant alternée avec celle de son voisin comme illustré sur le polariseur vu de face de la référence 2'b.

A l'issue de cette étape, grâce à l'un de ces imageurs on a donc fait l'acquisition de deux images à chaque longueur d'onde $\lambda_i$ : on a acquis 2N images polarisées. Les premières N images $X_{//}(\lambda_i)$ correspondent à l'état de polarisation parallèle à celui de l'illumination. Les secondes N images nommées $X_\perp(\lambda_i)$ correspondent à l'état de polarisation orthogonal à celui de l'illumination.

Pour chaque point de la scène (chaque pixel) on utilise ces 2N mesures pour obtenir au final une nouvelle image de contraste, en effectuant l'étape suivante.

On considère à présent l'étape de traitement des 2N images acquises qui repose sur l'exploitation conjointe du spectre de réflectance (aussi désigné spectre d'intensité) et du spectre de degré de polarisation (ou spectre polarimétrique, spectre d'OSC).

A partir de ces deux N images acquises nous calculons pour chacune des N longueurs d'onde $\lambda_1$, ..., $\lambda_i$, ... $\lambda_N$ disponibles :

- une image d'intensité INT($\lambda$i) à partir d'une combinaison linéaire des images polarisées, qui est relative à la réflectance de l'objet observé et,
- une image de contraste de polarisation aussi désignée image OSC($\lambda$i) acronyme de l'expression anglo-saxonne « Orthogonal State Contrast », établie à partir d'un rapport d'images d'intensité calculé en fonction des images polarisées.

La combinaison linéaire est par exemple de la forme :

$$INT(\lambda_i) = \left( X_{/\!/}(\lambda_i) + X_{\perp}(\lambda_i) \right),$$

et l'image de contraste de polarisation est par exemple de la forme :

$$OSC(\lambda_i) = (X_{/\!/}(\lambda_i) - X_{\perp}(\lambda_i)) / (X_{/\!/}(\lambda_i) + X_{\perp}(\lambda_i)).$$

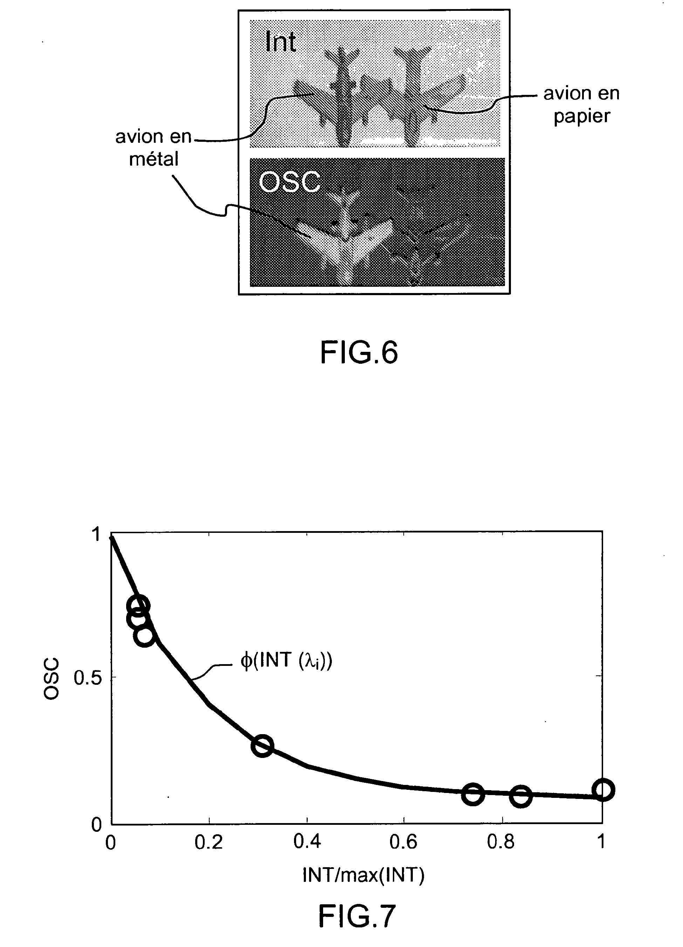

On voit figure 6 un exemple de telles images INT et OSC obtenues avec l'imageur décrit en relation avec la figure 2a. La scène comporte deux avions, l'un en papier l'autre en métal. Les images INT et OSC sont obtenues en une seule acquisition : l'image OSC permet de distinguer à partir des deux avions visibles sur l'image INT et a priori identiques, la nature du matériau qui diffère d'un avion à l'autre.

Les images INT peuvent aussi être de la forme :

$$INT = (X_{/\!/} + X^{\perp}) / max(X_{/\!/} + X^{\perp}),$$

les valeurs des images INT étant alors comprises entre 0 et 1, ceci n'étant pas couvert par la revendication 1 et ne faisant pas partie de l'invention; ou

$$INT = 2(X_{/\!/} + X^{\perp}).$$

Les images OSC peuvent aussi être de la forme :

$$OSC = log[ (X_{/\!/} - X\perp) / ( X_{/\!/} + X\perp) ]$$

ou

$$OSC = log[ (X_{/\!/} / X\perp) ]$$

ou

$$OSC = X_{/\!/} / X\perp$$

Pour chacun des points de la scène, et donc pour chaque pixel des images INT et OSC, on calcule alors un spectre d'intensité à partir des N images d'intensité INT, et un spectre d'OSC, à partir des N images de contraste de polarisation OSC. Les spectres sont dans la pratique des vecteurs de taille N, c'est-à-dire correspondant aux N longueurs d'onde différentes ($\lambda$1, $\lambda$2... $\lambda$N). On note U le spectre d'intensité et V le spectre d'OSC. Ainsi U et V sont des vecteurs de taille N tels que $U_i$ = INT($\lambda_i$) et $V_i$ = $OSC(\lambda_i)$.

On peut utiliser au cours de cette étape un outil de calcul qui est un graphe spectro-polarimétrique ou « GSP ». Il n'est pas nécessaire mais il permet une représentation visuelle. Le GSP est un nuage de N points dont les coordonnées sont Ui et Vi. Une généralisation consiste à tracer fi(U) et gi(V), où fi et gi sont des fonctions ; elles peuvent permettre une normalisation ou une dérivation par exemple.

A partir de ce graphe, il est possible d'extraire plusieurs quantités relatives à la corrélation existant entre le spectre d'intensité et le spectre d'OSC, et désignées images CSP. Ces images CSP peuvent être obtenues sans recourir au graphe GSP, directement à partir des 2N images au moyen d'une formule mathématique adaptée à chaque cas.

On va à présent donner différents exemples d'obtention d'une image finale CSP à partir d'un tel graphe et avec :

$$INT(\lambda_i) = \left( X_{//}(\lambda_i) + X_{\perp}(\lambda_i) \right)$$

et

$$OSC(\lambda_i) = (X_{//}(\lambda_i) - X_{\perp}(\lambda_i)) / (X_{//}(\lambda_i) + X_{\perp}(\lambda_i))$$ .

Selon un premier exemple, l'image CSP est obtenue par ajustement du GSP par une exponentielle décroissante. Des études menées par la demanderesse ont permis de montrer que l'OSC décroît exponentiellement avec la réflectance pour les matériaux diffusants. Le Graphe Spectro Polarimétrique de matériaux diffusants peut donc être modélisé par une fonction du type :

$$\Phi(Ui) = a \exp(-b*Ui) + c.$$

Pour chacun des points de l'image, on optimise les paramètres a, b et c afin que la fonction $\Phi$ approche au mieux les points mesurés. Pour cela, on utilise une fonction de mérite f_merite que l'on cherche à minimiser par des méthodes classiques d'optimisation.

Dans notre cas :

$$f_{merite} = \sum_{i=1}^{N} |V_i - \Phi(U_i)|^2$$

L'image CSP est cette fonction $\Phi$ obtenue par la fonction de mérite optimisée. Pour chaque pixel de l'image CSP on a une valeur de $\Phi$ et une valeur pour les trois paramètres a,b,c dont on montre un exemple figure 7 obtenu pour un pixel d'une image d'un plastique rouge. Le modèle est adapté à des matériaux diffusants. Le GSP de la plaque métallique ne peut pas bien être ajusté par une telle fonction. Sa fonction de mérite est élevée. Au contraire, le modèle permet de d'estimer de façon fiable le comportement du papier qui est diffusant. Sa fonction de mérite est plus faible.

Dans un deuxième exemple, l'image CSP est obtenue par corrélation linéaire du GSP. En s'inspirant de la méthode précédente, on exploite la décroissance exponentielle de l'image d'OSC avec l'image de réflectance. Pour chaque point (pixel) de l'image on calcule par exemple le coefficient de corrélation linéaire entre INT et -log(OSC). Le coefficient de corrélation linéaire peut être estimé par le coefficient de corrélation de Pearson défini par :

$$\rho(U,V) = \frac{1}{N-1} \sum_{i=1}^{N} \left( \frac{U_i - \overline{U}}{\sigma_U} \right) \left( \frac{V_i - \overline{V}}{\sigma_V} \right)$$

$$\text{avec } \overline{U} = \frac{1}{N} \sum_{i=1}^{N} U_i \text{ et } \sigma_U = \sqrt{\frac{1}{N-1} \sum_{i=1}^{N} \left( U_i - \overline{U} \right)^2}$$

$$\overline{V} = \frac{1}{N} \sum_{i=1}^{N} V_i \text{ et } \sigma_V = \sqrt{\frac{1}{N-1} \sum_{i=1}^{N} \left(V_i - \overline{V}\right)^2}$$

Cette quantité est relative à la corrélation entre les spectres. On l'appelle corrélation d'ordre 0.

De la même manière il est possible de calculer le coefficient de corrélation entre les pentes des spectres, c'est-à-dire entre les variables aléatoires $U'_i = \dfrac{INT(\lambda_{i+1}) - INT(\lambda_i)}{\lambda_{i+1} - \lambda_i}$ et $V'_i = \dfrac{OSC(\lambda_{i+1}) - OSC(\lambda_i)}{\lambda_{i+1} - \lambda_i}$

que l'on appelle corrélation d'ordre 1.

De la même manière il est possible de calculer les corrélations d'ordre 2,3..N. Pour du plastique rouge très diffusant l'image CSP qui est l'image de corrélation d'ordre 0 entre INT et -log(OSC) apparaît en blanc. Ses spectres d'intensité et d'OSC sont en effet très corrélés. Le métal quant à lui apparaît en noir avec un coefficient de corrélation proche de 0.

Dans un troisième exemple, l'image CSP est obtenue par l'indice de confiance du GSP : l'indice de confiance permet d'indiquer si la mesure de corrélation est fiable. Cet indice est égal à la variance spectrale de l'intensité divisée par la moyenne spectrale de l'intensité :

$$IND_{INT} = \frac{\sqrt{\dfrac{1}{N} \sum_{i=1}^{N} U_i^2 - \left(\dfrac{1}{N} \sum_{i=1}^{N} U_i\right)^2}}{\dfrac{1}{N} \sum_{i=1}^{N} U_i}$$

ou à la variance spectrale de l'OSC divisée par la moyenne spectrale de l'OSC :

$$IND_{OSC} = \frac{\sqrt{\dfrac{1}{N} \sum_{i=1}^{N} V_i^2 - \left(\dfrac{1}{N} \sum_{i=1}^{N} V_i\right)^2}}{\dfrac{1}{N} \sum_{i=1}^{N} V_i}$$

En effet si le spectre de réflectance (ou le spectre d'OSC) est très dispersé, les points correspondants sont éloignés les uns des autres, ce qui permet de faire un ajustement ou de calculer un coefficient de corrélation avec une plus grande précision.

Dans ce quatrième exemple, l'image CSP est obtenue par la dispersion relative des spectres. La dispersion des points du GSP dans la direction horizontale (qui correspond à la dispersion du spectre d'intensité) peut être caractérisée par la variance du vecteur U et la dispersion dans la direction verticale (qui correspond à la dispersion du spectre d'OSC) peut être caractérisée par la variance du vecteur V associé. Il est possible de faire l'image du rapport entre ces deux variances :

$$DISP = \frac{\dfrac{1}{N} \sum_{i=1}^{N} U_i^2 - \left(\dfrac{1}{N} \sum_{i=1}^{N} U_i\right)^2}{\dfrac{1}{N} \sum_{i=1}^{N} V_i^2 - \left(\dfrac{1}{N} \sum_{i=1}^{N} V_i\right)^2}$$

Ce rapport sera grand si le nuage de point correspondant au GSP est étendu horizontalement et faible si le nuage de point est étendu verticalement.

L'image CSP obtenue permet de faire la distinction entre un matériau diffusant lisse et rugueux. Le plastique lisse apparaît plus sombre.

On peut bien sûr réaliser plusieurs images CSP et choisir la meilleure c'est-à-dire celle qui fournit le plus d'informations recherchées, voire même les combiner pour réaliser une nouvelle image CSP.

Ce traitement des images acquises est par exemple réalisé de manière classique par un logiciel de traitement d'images.

## Revendications

1. Procédé d'identification d'images d'une scène (1) qui comprend une étape d'illumination de la scène par un faisceau de N longueurs d'onde, polarisé selon une direction déterminée, N étant un entier supérieur ou égal à 3, comprenant les étapes suivantes :

   - acquisition simultanée pour chaque longueur d'onde d'une image polarisée selon ladite direction, soit N images (11) notées $X_{//}(\lambda_i)$ avec i variant de 1 à N et d'une image polarisée selon une direction perpendiculaire à ladite direction, soit N images (12) notées $X_{\perp}(\lambda_i)$, ces images $X_{\perp}(\lambda_i)$ étant spatialement distinctes des images $X_{//}(\lambda_i)$,
   - calcul pour chaque longueur d'onde d'une image d'intensité qui est une combinaison linéaire de $X_{//}(\lambda_i)$ et de $X_{\perp}(\lambda_i)$, à ces N images d'intensité correspondant donc pour chaque pixel un spectre d'intensité,
   - calcul pour chaque longueur d'onde d'une image de contraste de polarisation à partir d'un rapport d'intensité calculé en fonction de $X_{//}(\lambda_i)$ et de $X_{\perp}(\lambda_i)$, à ces N images de contraste de polarisation correspondant donc pour chaque pixel un spectre de contraste de polarisation,

   **caractérisé en ce que** le procédé comprend l'étape suivant:

   - calcul d'une image de la scène dite image de contraste spectro-polarimétrique et notée image CSP, chaque pixel de cette image étant obtenue à partir du spectre d'intensité et du spectre de contraste du pixel considéré.

2. Procédé d'identification d'une scène (1) selon la revendication précédente, **caractérisé en ce que** l'image de contraste de polarisation est calculée en fonction de $(X_{//}(\lambda_i) - X_{\perp}(\lambda_i)) / (X_{//}(\lambda_i) + X_{\perp}(\lambda_i))$.

3. Procédé d'identification d'une scène (1) selon la revendication 1, **caractérisé en ce que** l'image de contraste de polarisation est calculée en fonction de $X_{//}(\lambda_i) / X_{\perp}(\lambda_i)$.

4. Procédé d'identification d'une scène (1) selon l'une des revendications précédentes, **caractérisé en ce que** l'image d'intensité est de la forme $X_{//}(\lambda_i) + X_{\perp}(\lambda_i)$.

5. Procédé d'identification d'une scène (1) selon l'une des revendications précédentes, **caractérisé en ce que** K autres images CSP sont respectivement obtenues à partir du spectre d'intensité et du spectre de contraste par K autres calculs, et **en ce qu'**une nouvelle image CSP est obtenue à partir de ces K images CSP, K étant un entier supérieur ou égal à 1.

6. Procédé d'identification d'une scène (1) selon l'une des revendications précédentes, **caractérisé en ce que** l'image CSP est obtenue à partir d'un graphe spectro-polarimétrique GSP qui comporte N points de coordonnées Ui=INT $(\lambda_i)$ et Vi=OSC$(\lambda_i)$.

7. Procédé d'identification d'une scène (1) selon la revendication précédente prise en combinaison avec les revendications 2 et 4, **caractérisé en ce que** l'image CSP est obtenue par ajustement du GSP par une fonction exponentielle décroissante.

8. Procédé d'identification d'une scène (1) selon la revendication 6 prise en combinaison avec les revendications 2 et 4, **caractérisé en ce que** l'image CSP est obtenue par corrélation linéaire du GSP.

9. Procédé d'identification d'une scène (1) selon la revendication 6 prise en combinaison avec les revendications 2 et 4, **caractérisé en ce que** l'image CSP est obtenue par un indice de confiance du GSP.

**10.** Procédé d'identification d'une scène (1) selon la revendication 6 prise en combinaison avec les revendications 2 et 4, **caractérisé en ce que** l'image CSP est obtenue par le rapport entre la dispersion du spectre d'intensité et du spectre d'OSC.

**11.** Procédé d'identification d'une scène (1) selon l'une des revendications précédentes, **caractérisé en ce que** les images $X_\perp(\lambda_i)$ et $X_{//}(\lambda_i)$ sont entrelacées.

**12.** Système d'identification d'une scène (1) qui comprend des moyens de mise en oeuvre du procédé selon l'une des revendications précédentes.

**13.** Système d'identification d'une scène (1) selon la revendication précédente, **caractérisé en ce que** les moyens de mise en oeuvre comportent un dispositif d'illumination de la scène par un faisceau de N longueurs d'onde, polarisé selon une direction déterminée, un dispositif (100) d'acquisition simultanée des N images (11) notées $X_{//}(\lambda_i)$, et des N images (12) notées $X_\perp(\lambda_i)$ et des moyens de traitement desdites images acquises, aptes à calculer une image CSP.

**14.** Système d'identification d'une scène (1) selon la revendication précédente, **caractérisé en ce que** le dispositif (100) d'acquisition comprend un seul détecteur.

## Claims

**1.** Method for identifying images from a scene (1) which comprises a step for illuminating the scene with a beam of N wavelengths, which is polarized in a predetermined direction, N being a whole number which is greater than or equal to 3, comprising the following steps:

- simultaneous acquisition for each wavelength of an image which is polarised in accordance with the direction, that is, N images (11) which are designated $x_{//}(\lambda_i)$ with i varying from I to N and an image which is polarized in accordance with a direction perpendicular to that direction, that is, N images (12) which are designated $x_\perp(\lambda_i)$, these images $x_\perp(\lambda_i)$ being spatially separate from the images $x_{//}(\lambda_i)$,
- calculation, for each wavelength, of an intensity image which is a linear combination of $x_{//}(\lambda_i)$ and $x_\perp(\lambda_i)$, with, therefore, for each pixel an intensity spectrum corresponding to those N intensity images,
- calculation, for each wavelength, of a polarisation contrast image on the basis of an intensity ratio which is calculated in accordance with $x_{//}(\lambda_i)$ and $x_\perp(\lambda_i)$, with, therefore, for each pixel a polarisation contrast spectrum corresponding to those N polarisation contrast images,

**characterised in that** the method comprises the following step:

- calculation of an image from the scene which is called a spectropolarimetric contrast image and which is designated SPC image, each pixel of this image being obtained from the intensity spectrum and from the contrast spectrum of the pixel involved.

**2.** Method for identifying a scene (1) according to the preceding claim, **characterised in that** the polarisation contrast image is calculated as a function of $(X_{//}(\lambda_i) - X_\perp(\lambda_i)) / (X_{//}(\lambda_i) + X_\perp(\lambda_i))$.

**3.** Method for identifying a scene (1) according to claim 1, **characterised in that** the polarisation contrast image is calculated as a function of $X_{//}(\lambda_i)/X_\perp(\lambda_i)$.

**4.** Method for identifying a scene (1) according to any one of the preceding claims, **characterised in that** the intensity image is of the form $X_{//}(\lambda_i) + X_\perp(\lambda_i)$.

**5.** Method for identifying a scene (1) according to any one of the preceding claims, **characterised in that** K other SPC images are obtained from the intensity spectrum and the contrast spectrum by means of K other calculations, respectively, and **in that** a new SPC image is obtained from these K SPC images, K being a whole number which is greater than or equal to 1.

**6.** Method for identifying a scene (1) according to any one of the preceding claims, **characterised in that** the SPC image is obtained from a spectropolarimetric graph SPG which comprises N coordinate points $U_i=INT(\lambda_i)$ and $V_i=OSC(\lambda_i)$.

**7.** Method for identifying a scene (1) according to the preceding claim, taken in combination with claims 2 and 4, **characterised in that** the SPC image is obtained by means of adjustment of the SPG by means of a decreasing exponential function.

**8.** Method for identifying a scene (1) according to claim 6 taken in combination with claims 2 and 4, **characterised in that** the SPC image is obtained by means of linear correlation of the SPG.

**9.** Method for identifying a scene (1) according to claim 6 taken in combination with claims 2 and 4, **characterised in that** the SPC image is obtained by of a confidence index of the SPG.

**10.** Method for identifying a scene (1) according to claim 6 taken in combination with claims 2 and 4, **characterised in that** the SPC image is obtained by of the ratio between the dispersion of the intensity spectrum and the OSC spectrum.

**11.** Method for identifying a scene (1) according to any one of the preceding claims, **characterised in that** the images $X_\perp(\lambda_i)$ and $X_{//}(\lambda_i)$ are interlaced.

**12.** System for identifying a scene (1) which comprises for implementing the method according to any one of the preceding claims.

**13.** System for identifying a scene (1) according to the preceding claim, **characterised in that** the implementation means comprise a device for illuminating the scene with a beam of N wavelengths, polarised in a predetermined direction, a device (100) for simultaneous acquisition of N images (11) designated $X_{//}(\lambda_i)$, and N images (12) designated $X_\perp(\lambda_i)$ and means for processing the images acquired, which are capable of calculating an SPC image.

**14.** System for identifying a scene (1) according to the preceding claim, **characterised in that** the acquisition device (100) comprises a single detector.

## Patentansprüche

**1.** Verfahren zum Identifizieren von Bildern einer Szene (1), das einen Schritt des Beleuchtens der Szene mit einem Strahl von N Wellenlängen umfasst, in einer bestimmten Richtung polarisiert, wobei N eine ganze Zahl gleich oder größer als 3 ist, das die folgenden Schritte beinhaltet:

- gleichzeitiges Erfassen für jede Wellenlänge eines in der Richtung polarisierten Bildes, entweder von N mit $X_{//}(\lambda_i)$ bezeichneten Bildern (11), wobei i von 1 bis N variiert, und eines in einer Richtung lotrecht zu dieser Richtung polarisierten Bildes, oder von N mit $X_\perp(\lambda_i)$ bezeichneten Bildern (12), wobei diese Bilder $X_\perp(\lambda_i)$ räumlich von den Bildern $X_{//}(\lambda_i)$ getrennt sind,
- Berechnen für jede Wellenlänge eines Intensitätsbildes, das eine lineare Kombination von $X_{//}(\lambda_i)$ und $X_\perp(\lambda_i)$ ist, wobei diesen Intensitätsbildern somit für jedes Pixel ein Intensitätsspektrum entspricht,
- Berechnen für jede Wellenlänge eines Polarisationskontrastbildes von einem in Abhängigkeit von $X_{//}(\lambda_i)$ und von $X_\perp(\lambda_i)$ berechneten Intensitätsverhältnis, wobei diesen N Polarisationskontrastbildern somit für jedes Pixel ein Polarisationskontrastspektrum entspricht,

**dadurch gekennzeichnet, dass** das Verfahren den folgenden Schritt beinhaltet:

- Berechnen eines Bildes der Szene, spektropolarimetrisches Kontrastbild genannt und als CSP-Bild bezeichnet, wobei jedes Pixel dieses Bildes vom Intensitätsspektrum und vom Kontrastspektrum des betrachteten Pixels erhalten wird.

**2.** Verfahren zum Identifizieren einer Szene (1) nach dem vorherigen Anspruch, **dadurch gekennzeichnet, dass** das Polarisationskontrastbild in Abhängigkeit von $(X_{//}(\lambda_i) - X_\perp(\lambda_i)) / (X_{//}(\lambda_i) + X_\perp(\lambda_i))$ berechnet wird.

**3.** Verfahren zum Identifizieren einer Szene (1) nach Anspruch 1, **dadurch gekennzeichnet, dass** das Polarisationskontrastbild in Abhängigkeit von $X_{//}(\lambda_i)/X_\perp(\lambda_i)$ berechnet wird.

**4.** Verfahren zum Identifizieren einer Szene (1) nach einem der vorherigen Ansprüche, **dadurch gekennzeichnet, dass** das Intensitätsbild die Form $X_{//}(\lambda_i) + X_\perp(\lambda_i)$ hat.

5. Verfahren zum Identifizieren einer Szene (1) nach einem der vorherigen Ansprüche, **dadurch gekennzeichnet, dass** K andere CSP-Bilder jeweils von dem Intensitätsspektrum und dem Kontrastspektrum durch K andere Berechnungen erhalten werden, und dadurch, dass ein neues CSP-Bild von diesen K CSP-Bildern erhalten wird, wobei K eine ganze Zahl gleich oder größer als 1 ist.

6. Verfahren zum Identifizieren einer Szene (1) nach einem der vorherigen Ansprüche, **dadurch gekennzeichnet, dass** das CSP-Bild von einer spektropolarimetrischen GSP-Kurve erhalten wird, die N Koordinatenpunkte $U_i = INT(\lambda_i)$ und $V_i = SC(\lambda_i)$ umfasst.

7. Verfahren zum Identifizieren einer Szene (1) nach dem vorherigen Anspruch in Kombination mit den Ansprüchen 2 und 4, **dadurch gekennzeichnet, dass** das CSP-Bild durch Justieren von GSP durch eine abnehmende Exponentialfunktion erhalten wird.

8. Verfahren zum Identifizieren einer Szene (1) nach Anspruch 6 in Kombination mit den Ansprüchen 2 und 4, **dadurch gekennzeichnet, dass** das CSP-Bild durch lineare Korrelation von GSP erhalten wird.

9. Verwahren zum Identifizieren einer Szene (1) nach Anspruch 6 in Kombination mit den Ansprüchen 2 und 4, **dadurch gekennzeichnet, dass** das CSP-Bild durch einen Konfidenzindex von GSP erhalten wird.

10. Verfahren zum Identifizieren einer Szene (1) nach Anspruch 6 in Kombination mit den Ansprüchen 2 und 4, **dadurch gekennzeichnet, dass** das CSP-Bild durch das Verhältnis zwischen der Verteilung des Intensitätsspektrums und des OSC-Spektrums erhalten wird.

11. Verfahren zum Identifizieren einer Szene (1) nach einem der vorherigen Ansprüche, **dadurch gekennzeichnet**, die Bilder $X_\perp(\lambda_i)$ und $X_{//}(\lambda_i)$ verflochten sind.

12. System zum Identifizieren einer Szene (1), das Mittel zum Ausführen des Verfahrens nach einem der vorherigen Ansprüche umfasst.

13. System zum Identifizieren einer Szene (1) nach dem vorherigen Anspruch, **dadurch gekennzeichnet, dass** die Ausführungsmittel Folgendes umfassen: eine Vorrichtung zum Beleuchten der Szene mit einem Strahl von N Wellenlängen, in einer bestimmten Richtung polarisiert, eine Vorrichtung (100) zum gleichzeitigen Erfassen von N mit $X_{//}(\lambda_i)$ bezeichneten Bildern (11) und von N mit $X_\perp(\lambda_i)$ bezeichneten Bildern (12), und Mittel zum Verarbeiten der erfassten Bilder, zum Berechnen eines CSP-Bildes.

14. System zum Identifizieren einer Szene (1) nach dem vorherigen Anspruch, **dadurch gekennzeichnet, dass** die Erfassungsvorrichtung (100) einen einzigen Detektor umfasst.

FIG.1

FIG.2a

FIG.2b

FIG.3a

FIG.3b

FIG.4

FIG.5

avion en
métal

avion en
papier

FIG.6

$\phi(INT(\lambda_i))$

FIG.7

## RÉFÉRENCES CITÉES DANS LA DESCRIPTION

**Littérature non-brevet citée dans la description**

- **BENIERE A et al.** Snapshot active polarimetric and multispectral laboratory demonstrator. *LASER RADAR TECHNOLOGY AND APPLICATIONS XIV, Proceedings of the SPIE,* 15 Avril 2009, vol. 7323